# EUROPÄISCHE PATENTSCHRIFT

(11) **EP 2 814 701 B1**
(45) Veröffentlichungstag und Bekanntmachung des Hinweises auf die Patenterteilung: **11.05.2016**
(21) Anmeldenummer: 12810200.1
(22) Anmeldetag: 17.12.2012
(51) Int. Cl.: B60T 7/04, B60T 8/40, B60T 11/20, B60T 13/58, B60T 13/74

(54) **BREMSGERÄT FÜR EIN FAHRZEUG UND VERFAHREN ZUM BETREIBEN EINES BREMSGERÄTS EINES FAHRZEUGS**
VEHICLE BRAKE DEVICE, -SYSTEM AND -METHOD
DISPOSITIF DE FREINAGE D'UN VÉHICULE ET PROCÉDÉ PERMETTANT DE FAIRE FONCTIONNER UN DISPOSITIF DE FREINAGE D'UN VÉHICULE

(30) Priorität: 14.02.2012 DE 102012202201
(43) Veröffentlichungstag der Anmeldung: 24.12.2014
(73) Patentinhaber: Robert Bosch GmbH, 70442 Stuttgart (DE)
(72) Erfinder: WEIBERLE, Reinhard, 71665 Vaihingen/Enz (DE); KISTNER, Matthias, 74626 Bretzfeld (DE)
(86) Internationale Anmeldenummer: PCT/EP2012/075725
(87) Internationale Veröffentlichungsnummer: WO 2013/120562

(56) Entgegenhaltungen:
- DE-A1-102009 055 117
- DE-A1-102010 038 555

## Beschreibung

Die Erfindung betrifft ein Bremsgerät für ein Fahrzeug. Des Weiteren betrifft die Erfindung Verfahren zum Betreiben eines Bremsgeräts eines Fahrzeugs.

### Stand der Technik

In der DE 10 2009 055 117 A1 sind ein Hauptbremszylinder für eine hydraulische Fahrzeugbremsanlage und ein Verfahren zu deren Betrieb beschrieben. Der Hauptbremszylinder weist einen als ersten Kolben bezeichenbaren Stangenkolben und einen rohrförmigen zweiten Kolben auf. Der erste Kolben ist um einen vorgegebenen Kolbenweg durch den zweiten Kolben in eine erste Druckkammer des Hauptbremszylinders hinein schiebbar. Eine an dem zweiten Kolben ausgebildete Mitnehmereinrichtung soll bewirken, dass der erste Kolben nach Überwindung des vorgegebenen Kolbenwegs den zweiten Kolben mitnimmt. Der erste Kolben und der zweite Kolben sollen nach der Überwindung des vorgegebenen Kolbenwegs gemeinsam auf die erste Druckkammer des Hauptbremszylinders einwirken können. Zusätzlich soll mittels eines Schwimmkolbens auf eine zweite Druckkammer des Hauptbremszylinders einwirkbar sein.

### Offenbarung der Erfindung

Die Erfindung schafft ein Bremsgerät für ein Fahrzeug mit den Merkmalen des Anspruchs 1, ein Bremssystem mit den Merkmalen des Anspruchs 10, ein Verfahren zum Betreiben eines Bremsgeräts eines Fahrzeugs mit den Merkmalen des Anspruchs 12 und ein Verfahren zum Betreiben eines Bremsgeräts eines Fahrzeugs mit den Merkmalen des Anspruchs 15.

### Vorteile der Erfindung

Durch die vorteilhafte Ausbildung eines ersten Leerwegs zwischen der kraftfreien Ausgangsstellung der Bremskraftübertragungskomponente und dem ersten Primärkolbenbauteil kann eine Wirkung einer auf das Bremsbetätigungselement/Bremspedal ausgeübten Fahrerbremskraft reduziert/unterbunden werden. Man kann dies auch so umschreiben, dass trotz der auf das Bremsbetätigungselement ausgeübten Fahrerbremskraft ein Einbremsen des Fahrers in den Hauptbremszylinder auf einfache Weise reduzierbar/verhinderbar ist. Ebenso kann durch einen zweiten Leerweg zwischen der in ihrer kraftfreien Ausgangsstellung vorliegenden Verstärkerkraftübertragungskomponente und dem zweiten Primärkolbenbauteil verhindert werden, dass eine auf die Verstärkerkraftübertragungskomponente ausgeübte Verstärkerkraft automatisch ein Einbremsen in den Hauptbremszylinder bewirkt. Außerdem kann eine Einbremswirkung der mittels der Aktoreinrichtung auf die Verstärkerkraftübertragungskomponente ausgeübten Verstärkerkraft durch das Ausbilden des zweiten Leerwegs reduziert werden.

Die in dem oberen Absatz beschriebenen Vorteile des ersten Leerwegs und/oder des zweiten Leerwegs können für eine Vielzahl von Nutzungsmöglichkeiten des erfindungsgemäßen Bremsgeräts ausgenutzt werden. Beispiele dazu werden in den folgenden Textstellen noch angegeben.

Beispielsweise kann die in ihrer kraftfreien Ausgangsstellung vorliegende Bremskraftübertragungskomponente um den ersten Leerweg ungleich Null von dem ersten Primärkolbenbauteil beabstandet sein, welcher größer als ein Abstand zwischen der in ihrer kraftfreien Ausgangsstellung vorliegenden Verstärkerkraftübertragungskomponente und dem zweiten Primärkolbenbauteil ist. Der Abstand zwischen der Verstärkerkraftübertragungskomponente in ihrer kraftfreien Ausgangsstellung und dem zweiten Primärkolbenbauteil kann gleich Null oder ungleich Null sein. Somit kann bereits vor einem direkten Einbremsen des Fahrers in den Hauptbremszylinder ein Vordruck zumindest in der ersten Primärkolbenkammer aufgebaut werden. Wie unten genauer ausgeführt wird, kann somit bereits vor einem Einbremsen des Fahrers in den Hauptbremszylinder ein Lüftspiel geschlossen werden.

Alternativ kann die in ihrer kraftfreien Ausgangsstellung vorliegende Verstärkerkraftübertragungskomponente um den zweiten Leerweg ungleich Null von dem zweiten Primärkolbenbauteil beabstandet sein, welcher größer als ein Abstand zwischen der in ihrer kraftfreien Ausgangsstellung vorliegenden Bremskraftübertragungskomponente und dem ersten Primärkolbenbauteil ist. Der Abstand zwischen der Bremskraftübertragungskomponente in ihrer kraftfreien Ausgangsstellung und dem ersten Primärkolbenbauteil kann in diesem Fall gleich Null oder ungleich Null sein. In beiden Fällen kann ein künstlich verlängerter Leerweg zwischen der in ihrer kraftfreien Ausgangsstellung vorliegenden Verstärkerkraftübertragungskomponente und dem zweiten Primärkolbenbauteil ausgebildet werden, welcher für eine Rekuperation nutzbar ist, ohne dass dies mit einem Überschreiten einer von dem Fahrer vorgegeben Soll-Verzögerung des Fahrzeugs verbunden ist.

In einer vorteilhaften Weiterbildung kann das Bremsgerät eine Flüssigkeitsaustauscheinrichtung aufweisen, über welche bei einem Vorliegen der Flüssigkeitsaustauscheinrichtung in einem ersten Betriebsmodus eine Flüssigkeit zwischen der ersten Primärkolbenkammer und der zweiten Primärkolbenkammer austauschbar ist, und über welche bei einem Vorliegen der Flüssigkeitsaustauscheinrichtung in einem zweiten Betriebsmodus ein Flüssigkeitsaustausch zwischen der ersten Primärkolbenkammer und der zweiten Primärkolbenkammer unterbunden ist. Durch das Schalten/Ansteuern der Flüssigkeitsaustauscheinrichtung kann somit das primäre Einbremsvolumen des Hauptbremszylinders variiert werden. Beispielsweise kann durch das Schalten/Steuern der Flüssigkeitsaustauscheinrichtung in den ersten Betriebsmodus festgelegt werden, dass der Fahrer und die Aktoreinrichtung in eine Gesamt-Primärkolbenkammer aus der ersten Primärkolbenkammer und der zweiten Primärkolbenkammer mit einem größeren Gesamtvolumen einbremsen können. Demgegenüber kann durch ein Schalten/Steuern der Flüssigkeitsaustauscheinrichtung in den zweiten Betriebsmodus festgelegt werden, dass lediglich der Fahrer in die erste Primärkolbenkammer, d. h. in ein primäres Einbremsvolumen mit lediglich dem ersten Volumen der Primärkolbenkammer, einbremsen kann. Das Schalten/Steuern der Flüssigkeitsaustauscheinrichtung in den zweiten Betriebsmodus ist insbesondere in einer mechanischen Rückfallebene, d. h. bei einem Ausfall/einer Funktionsbeeinträchtigung der Aktoreinrichtung, vorteilhaft.

Außerdem kann der Hauptbremszylinder zusätzlich eine Sekundärkolbenkammer und einen zwischen der ersten Primärkolbenkammer und der Sekundärkolbenkammer verstellbaren Sekundärkolben aufweisen. Die Vorteile der vorliegenden Erfindung sind somit auch auf einen Tandemhauptbremszylinder anwendbar.

In einer vorteilhaften Weiterbildung, in welcher zumindest die in ihrer kraftfreien Ausgangsstellung vorliegende Bremskraftübertragungskomponente um den ersten Leerweg ungleich Null von dem ersten Primärkolbenbauteil beabstandet ist, welcher erst ab einer Mindest-Fahrerbremskraft schließbar ist, kann das Bremsgerät eine Aktor-Steuervorrichtung aufweisen, mittels welcher die Aktoreinrichtung so ansteuerbar ist, dass bei einer Fahrerbremskraft unter der Mindest-Fahrerbremskraft eine vorgegebene Soll-Verstärkerkraft mittels der angesteuerten Aktoreinrichtung so auf das zweite Primärkolbenbauteil ausübbar ist, dass das zweite Volumen der zweiten Primärkolbenkammer mittels des verstellten zweiten Primärkolbenbauteils reduzierbar und ein Flüssigkeitstransfer von der zweiten Primärkolbenkammer in mindestens einen Radbremszylinder zum Aufbauen eines Vordrucks in dem mindestens einen Radbremszylinder auslösbar ist. Auf diese Weise ist gewährleistbar, dass bereits vor einem direkten Einbremsen des Fahrers in den Hauptbremszylinder ein vorteilhafter Vordruck in dem mindestens einen Radbremszylinder vorliegt.

Beispielsweise kann die Aktor-Steuervorrichtung zusätzlich dazu ausgelegt sein, die Soll-Verstärkerkraft unter Berücksichtigung mindestens eines Zustands einer Bremssystemkomponente und/oder einer Verkehrssituation vorzugeben. Somit kann bei einem Zustand der Bremssystemkomponente und/oder in einer Verkehrssituation, in welcher ein schnelles Abbremsen des Fahrzeugs vorteilhaft erscheint, schon vor einem direkten Einbremsen des Fahrers in den Hauptbremszylinder ein Vordruck in dem mindestens einen Radbremszylinder aufgebaut werden.

Außerdem kann die Soll-Verstärkerkraft so vorgegeben oder mittels der Aktor-Steuervorrichtung so vorgebbar sein, dass ein Lüftspiel zwischen mindestens einem restmomentfreien Bremssattel und einer Bremsscheibe mittels des aufgebauten Vordrucks schließbar ist. Während herkömmlicherweise viele Fahrer die Ausstattung ihres Bremssystems mit mindestens einem restmomentfreien Bremssattel trotz des damit verbundenen reduzierten Kraftstoffverbrauchs ablehnen, da das Schließen des Lüftspiels zwischen dem mindestens einen restmomentfreien Bremssattel und der damit zusammenwirkenden Bremsscheibe beim Stand der Technik zu einem verlängerten Bremsbetätigungsweg führt, kann bei der hier beschriebenen vorteilhaften Ausführungsform das Lüftspiel zwischen dem mindestens einen restmomentfreien Bremssattel und der damit zusammenwirkenden Bremsscheibe auf einfache Weise mittels des aufgebauten Vordrucks geschlossen werden. Dies führt zu einem deutlich verbesserten Bremskomfort für den Fahrer.

In einer weiteren Weiterbildung, in welcher zumindest die in ihrer kraftfreien Ausgangsstellung vorliegende Verstärkerkraftübertragungskomponente um den zweiten Leerweg ungleich Null von dem zweiten Primärkolbenbauteil beabstandet ist, welcher erst ab einer Mindest-Verstärkerkraft schließbar ist, kann das Bremsgerät eine Generator-Steuervorrichtung aufweis3en, welche zumindest bei einer Verstärkerkraft unter der Mindest-Verstärkerkraft dazu ausgelegt ist, einen Generator so anzusteuern, dass mittels des Generators ein Generator-Bremsmoment ungleich Null ausübbar ist. Die mittels des zweiten Leerwegs unterbundene Bremswirkung der Verstärkerkraft kann somit zum schnelleren Aufladen einer Fahrzeugbatterie genutzt werden.

Die in den oberen Absätzen beschriebenen Vorteile sind auch mittels eines Bremssystems mit einem entsprechenden Bremsgerät realisierbar.

Insbesondere kann das Bremssystem mindestens einen restmomentfreien Bremssattel aufweisen. Da mittels des Aufbauens eines Vordrucks bereits vor einem direkten Einbremsen des Fahrers mittels der Fahrerbremskraft das Lüftspiel zwischen dem mindestens einen Bremssattel und der damit zusammenwirkenden Bremsscheibe bereits schließbar ist, kann das Bremssystem die Vorteile eines guten Bedienkomforts mit einem reduzierten Kraftstoffverbrauch und einer geringeren Schadstoffemission vereinen.

Die oben ausgeführten Vorteile sind auch bewirkbar durch Ausführen eines entsprechenden Verfahrens zum Betreiben eines Bremsgeräts eines Fahrzeugs.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform des Bremsgeräts;
- Fig. 2a und 2b: schematische Teildarstellungen einer zweiten Ausführungsform des Bremsgeräts;
- Fig. 3: ein Flussdiagramm zum Darstellen einer ersten Ausführungsform des Verfahrens zum Betreiben eines Bremsgeräts eines Fahrzeugs; und
- Fig. 4: ein Flussdiagramm zum Darstellen einer zweiten Ausführungsform des Verfahrens zum Betreiben eines Bremsgeräts eines Fahrzeugs.

### Ausführungsformen der Erfindung

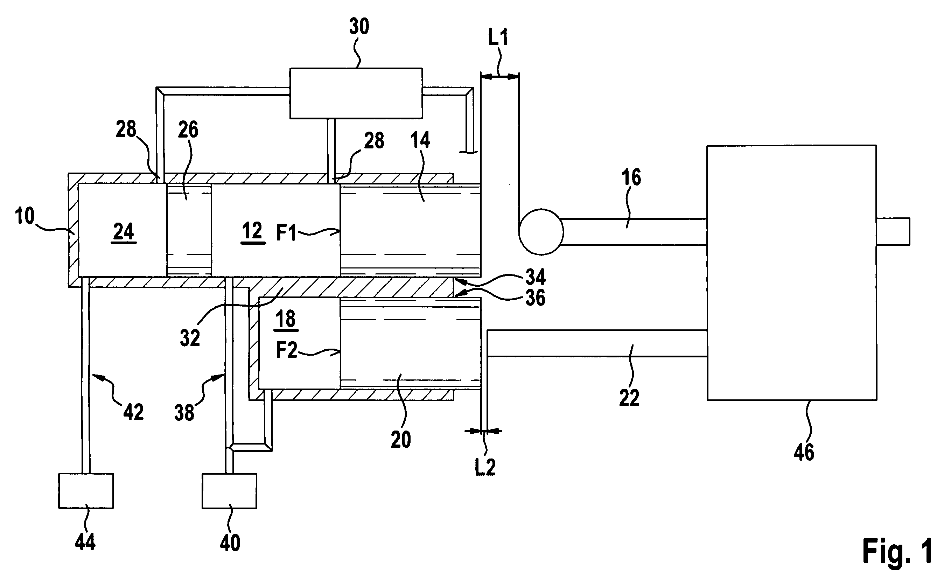

Fig. 1 zeigt eine schematische Darstellung einer ersten Ausführungsform des Bremsgeräts.

Das in Fig. 1 schematisch dargestellte Bremsgerät ist in einem Fahrzeug, vorzugsweise in einem mit einem Generator ausgestatteten Fahrzeug, einsetzbar. Das Bremsgerät kann als eine kompakte Einheit in einem Bremssystem des Fahrzeugs anordbar sein. Ebenso kann das Bremsgerät als nicht-getrennt ausgebildete Untereinheit des Bremssystems ausgebildet sein.

Das Bremsgerät weist einen Hauptbremszylinder 10 mit einer ersten Primärkolbenkammer 12 auf, wobei ein erstes Volumen der ersten Primärkolbenkammer 12 mittels eines verstellbaren ersten Primärkolbenbauteils 14 variierbar ist. Eine Bremskraftübertragungskomponente 16 des Bremsgeräts, wie beispielsweise eine Ausgangsstange, ist derart (direkt oder indirekt) an einem (nicht skizzierten) Bremsbetätigungselement anordbar, dass zumindest eine Fahrerbremskraft über die Bremskraftübertragungskomponente 16 auf das von der Bremskraftübertragungskomponente 16 kontaktierte erste verstellbare Primärkolbenbauteil 14 übertragbar ist. Das Bremsbetätigungselement kann beispielsweise ein Bremspedal sein. Die Ausbildbarkeit des Bremsbetätigungselements oder der Bremskraftübertragungskomponente 16 ist jedoch nicht auf die hier aufgezählten Ausführungsbeispiele beschränkt.

Der Hauptbremszylinder 10 hat auch eine zweite Primärkolbenkammer 18, deren zweites Volumen mittels eines verstellbaren zweiten Primärkolbenbauteils 20 variierbar ist. Das Bremsgerät weist außerdem eine Verstärkerkraftübertragungskomponente 22 auf, an welcher eine (nicht skizzierte) Aktoreinrichtung (direkt oder indirekt) derart anordbar ist, dass eine von der Aktoreinrichtung bereitgestellte Verstärkerkraft zumindest teilweise über die Verstärkerkraftübertragungskomponente 22 auf das von der Verstärkerkraftübertragungskomponente 22 kontaktierte zweite verstellbare Primärkolbenbauteil 20 übertragbar ist. Die Aktoreinrichtung kann beispielsweise ein Motor und/oder eine Hydraulik eines Bremskraftverstärkers sein.

Das erste Primärkolbenbauteil 14 und/oder das zweite Primärkolbenbauteil 20 können beispielsweise als Stangenkolbenbauteil ausgebildet sein. Es wird jedoch darauf hingewiesen, dass die Ausbildbarkeit eines Primärkolbenbauteils 14 und 20 nicht auf einen Stangenkolben limitiert ist. Ebenso können das erste Primärkolbenbauteil 14 und/oder das zweite Primärkolbenbauteil 2 jeweils aus mehreren Unterkomponenten aufgebaut sein. Auch die Form des ersten Primärkolbenbauteils 14 und des zweiten Primärkolbenbauteils 20 ist mit einer großen Designfreiheit festlegbar.

Außerdem sind die in ihrer kraftfreien Ausgangsstellung vorliegende Bremskraftübertragungskomponente 16 um einen ersten Leerweg L1 ungleich Null von dem ersten Primärkolbenbauteil 14 beabstandet und/oder die in ihrer kraftfreien Ausgangsstellung vorliegende Verstärkerkraftübertragungskomponente 22 um einen zweiten Leerweg L2 ungleich Null von dem zweiten Primärkolbenbauteil 20 beabstandet. Unter der kraftfreien Ausgangsstellung der Bremskraftübertragungskomponente 16 kann beispielsweise eine Stellung von dieser verstanden werden, in welcher die Bremskraftübertragungskomponente 16 vorliegt, wenn keine Fahrerbremskraft auf sie übertragen wird. Entsprechend ist vorzugsweise unter der kraftfreien Ausgangsstellung der Verstärkerkraftübertragungskomponente 22 eine Stellung von dieser zu verstehen, in welcher die Verstärkerkraftübertragungskomponente 22 bei einer Verstärkerkraft gleich Null, bzw. bei einer Deaktivierung der Aktoreinrichtung, vorliegt. Bevorzugter Weise sind unter den kraftfreien Ausgangsstellungen der Kraftübertragungskomponenten 16 und 22 Stellungen zu verstehen, in welchen die Kraftübertragungskomponenten 16 und 22 vorliegen, sofern keine Fahrerbremskraft auf das Bremsbetätigungselement ausgeübt wird und keine Verstärkerkraft mittels der Aktoreinrichtung bereitgestellt wird.

Das Ausbilden des ersten Leerwegs L1 ungleich Null ist mit dem Vorteil verbunden, dass trotz einer Fahrerbremskraft ungleich Null, welche ein Verstellen der Bremskraftübertragungskomponente 16 bewirkt, ein Einbremsen der Fahrerbremskraft in den Hauptbremszylinder 10 bis zu einer bestimmten Mindest-Fahrerbremskraft verhindert ist. Ebenso ist mittels des zweiten Leerwegs L2 ungleich Null bewirkt, dass trotz einer Verstärkerkraft ungleich Null, welche eine Verstellung der Verstärkerkraftübertragungskomponente 22 auslöst, ein Einbremsen der Verstärkerkraft in den Hauptbremszylinder 10 bis zu einem Überschreiten einer Mindest-Verstärkerkraft unterbunden ist. Dies kann für eine Vielzahl von vorteilhaften Nutzungsmöglichkeiten ausgenutzt werden, welche unten noch genauer beschrieben werden.

Beispielsweise kann die Bremskraftübertragungskomponente 16 in ihrer kraftfreien Ausgangsstellung um einen ersten Leerweg L1 ungleich Null beabstandet von dem ersten Primärkolbenbauteil 14 vorliegen, welcher größer als ein Abstand (gleich Null oder ungleich Null) zwischen der Verstärkerkraftübertragungskomponente 22 in ihrer kraftfreien Ausgangsstellung und dem zweiten Primärkolbenbauteil 20 ist. Wie unten genauer ausgeführt wird, ermöglicht dies das Aufbauen eines Vordrucks in der ersten Primärkolbenkammer 12 bereits vor einem direkten Einbremsen des Fahrers in den Hauptbremszylinder 10.

Alternativ kann auch die Verstärkerkraftübertragungskomponente 22 in ihrer kraftfreien Ausgangsstellung um einen zweiten Leerweg L2 ungleich Null beabstandet von dem zweiten Primärkolbenbauteil 20 vorliegen, welcher größer als ein Abstand (gleich Null oder ungleich Null) zwischen der Bremskraftübertragungskomponente 16 in ihrer kraftfreien Ausgangsstellung und dem ersten Primärkolbenbauteil 14 ist. Ein großer zweiter Leerweg L2 ist mit dem Vorteil verbunden, dass trotz einer Verstärkerkraft ungleich Null und einer zumindest geringfügig aus ihrer kraftfreien Ausgangsstellung verstellten Verstärkerkraftübertragungskomponente 22 kein zusätzlicher Bremsdruck durch ein Verstellen des zweiten Primärkolbenbauteils 20 aufgebaut wird. Die durch das Verharren des zweiten Primärkolbenbauteils 20 in einer Stellung mit einem maximalen zweiten Volumen entfallende Bremswirkung kann zum Einsetzen eines Generators genutzt werden, ohne dass eine von dem Fahrer vorgegebene Fahrzeugverzögerung überschritten wird. Somit kann ein vergleichsweise großer zweiter Leerweg L2 für ein schnelleres Aufladen einer Fahrzeugbatterie genutzt werden.

Bei der in Fig. 1 schematisch wiedergegebenen Ausbildung begrenzt das erste Primärkolbenbauteil 14 die erste Primärkolbenkammer 12 mit einer ersten Begrenzungsfläche F1. Entsprechend wird die zweite Primärkolbenkammer 18 von einer zweiten Begrenzungsfläche F2 des zweiten Primärkolbenbauteils 14 begrenzt. Es wird darauf hingewiesen, dass das erste Primärkolbenbauteil 14 auch bei einem Vorliegen der Aktoreinrichtung in einem deaktivierten/funktionsbeeinträchtigten Zustand noch in den Hauptbremszylinder 10 verstellbar ist. Die vorteilhafte geteilte Ausbildung des Hauptbremszylinders 10 und die Verwendung von zwei Primärkolbenbauteilen 14 und 20 ist zusätzlich mit dem Vorteil verbunden, dass bei einer Funktionsbeeinträchtigung der Aktoreinrichtung/Bremskraftverstärkervorrichtung mittels einer Betätigung des Bremsbetätigungselements lediglich das erste Primärkolbenbauteil 14 zu bewegen ist, während das zweite Primärkolbenbauteil 20 trotz der Betätigung des Bremsbetätigungselements durch den Fahrer in einer bestimmten Stellung verharrt. Der Fahrer muss damit nicht mit der Gesamt-Einbremsfläche gleich der Summe der Begrenzungsflächen F1 + F2, sondern lediglich mit einer reduzierten Einbremsfläche gleich der ersten Begrenzungsfläche F1, in die erste Primärkolbenkammer 12 des Hauptbremszylinders 10 einbremsen. Auf diese Weise ergibt sich mittels einer geänderten hydraulischen Übersetzung eine höhere Bremswirkung trotz einer gleichbleibenden Fahrerbremskraft. Man kann dies auch so umschreiben, dass aufgrund der reduzierten Einbremsfläche gleich der ersten Begrenzungsfläche F1 die Fahrerbremskraft einen größeren Druckaufbau in dem Hauptbremszylinder 10 bewirkt. Somit ist die Funktionsbeeinträchtigung der Aktoreinrichtung/Bremskraftverstärkervorrichtung aufgrund der vorteilhaften Ausbildung des Hauptbremszylinders 10 und der Verwendung von zwei Primärkolbenbauteilen 14 und 20 zumindest teilweise über eine gesteigerte Einbremskraft-Bremsdruck-Übersetzung auf einfache Weise kompensierbar. Außerdem kann aufgrund der vorteilhaften Unterteilung in die zumindest zwei voneinander abgegrenzten Primärkolbenkammern 12 und 18 das Einbremsvolumen bei einer Funktionsbeeinträchtigung der Bremskraftverstärkervorrichtung 12 reduziert werden. Dies verbessert zusätzlich die Kompensierbarkeit einer Funktionsbeeinträchtigung/eines Ausfalls der Bremskraftverstärkervorrichtung.

In einer vorteilhaften Weiterbildung kann der Hauptbremszylinder 10 zusätzlich eine Sekundärkolbenkammer 24 und einen zwischen der ersten Primärkolbenkammer 12 und der Sekundärkolbenkammer 24 verstellbaren Sekundärkolben 26 aufweisen. Der Sekundärkolben 26 kann insbesondere als Schwimmkolben ausgebildet sein. Die Vorteile eines Tandem-Hauptbremszylinder sind somit auch auf die hier beschriebene Ausbildungsform des Bremsgeräts anwendbar.

Die erste Primärkolbenkammer 12, die zweite Primärkolbenkammer 18 und/oder die Sekundärkolbenkammer 24 können über mindestens eine Bremsflüssigkeitsaustauschöffnung 28, wie beispielsweise eine Schnüffelbohrung, mit einem Bremsflüssigkeitsreservoir 30/Bremsflüssigkeitsbehälter verbunden sein. Außerdem kann zwischen der ersten Primärkolbenkammer 12 und der zweiten Primärkolbenkammer 18 zumindest eine Teiltrennwand 32 ausgebildet sein, welche das erste Volumen der ersten Primärkolbenkammer 12 von dem zweiten Volumen der zweiten Primärkolbenkammer 18 abtrennt. Dies erleichtert die Ausstattung des Hauptbremszylinders 10 mit zwei Primärkolben 14 und 20, welche vorzugsweise durch mindestens eine äußere Öffnung 34 und 36 des Hauptbremszylinders 10 zumindest teilweise in die ihnen zugeordnete Primärkolbenkammer 12 und 18 hineinverstellbar sind. Beispielsweise kann jedem der Primärkolbenbauteile 14 und 20 eine eigene Öffnung 34 und 36 zugeordnet sein. Mittels mindestens eines Dichtelements, wie beispielsweise eines Dichtrings, kann ein Heraussickern von Flüssigkeit trotz eines Verstellens des jeweiligen Primärkolbenbauteils 14 und 20 aus der jeweiligen Öffnung 34 und 36 verhindert werden.

In einer vorteilhaften Weiterbildung weist das Bremsgerät eine Flüssigkeitsaustauscheinrichtung 38 auf, über welche bei einem Vorliegen der Flüssigkeitsaustauscheinrichtung 38 in einem ersten Betriebsmodus eine Flüssigkeit zwischen der ersten Primärkolbenkammer 12 und der zweiten Primärkolbenkammer 18 austauschbar ist. Außerdem kann die Flüssigkeitsaustauscheinrichtung 38 aus dem ersten Betriebsmodus zumindest in einen zweiten Betriebsmodus steuerbar/schaltbar sein, wobei bei einem Vorliegen der Flüssigkeitsaustauscheinrichtung 38 in dem zweiten Betriebsmodus ein Flüssigkeitsaustausch zwischen der ersten Primärkolbenkammer 12 und der zweiten Primärkolbenkammer 18 mittels der Flüssigkeitsaustauscheinrichtung 38 unterbunden ist. Die Flüssigkeitsaustauscheinrichtung 38 kann beispielsweise ein erster Bremskreis 38 mit mindestens einem Radbremszylinder 40 sein, an welchen die Primärkolbenkammern 12 und 18 angebunden sind. Zum Schalten/Steuern des ersten Bremskreises 38 zwischen den mindestens zwei Betriebsmoden kann eine (nicht skizzierte) Komponente des ersten Bremskreises 38 verwendet werden. (Optionaler Weise kann auch die Sekundärkolbenkammer 24 an einen zweiten Bremskreis 42 mit mindestens einem Radbremszylinder 44 angebunden sein.) Als Flüssigkeitsaustauscheinrichtung 38 kann jedoch auch ein in der Teiltrennwand 32 ausgebildetes Ventil verwendet werden. Auf eine besonders vorteilhafte Ausbildung des mindestens einen Radbremszylinders 40 und 44/Ausstattung des mindestens einen Bremskreises 38 und 42 wird unten noch eingegangen.

In einer weiteren Weiterbildung kann das Bremsgerät einen Verstärkerkörper 46 aufweisen, welcher derart zwischen der Aktoreinrichtung und der Verstärkerkraftübertragungskomponente 22 angeordnet ist, dass die Verstärkerkraft über den Verstärkerkörper 46 auf die Verstärkerkraftübertragungskomponente 22 übertragbar ist. Der Verstärkerkörper 46 kann außerdem in mindestens einer Stellung die Bremskraftübertragungskomponente 16 kontaktieren. Somit kann zumindest ein Teil der Verstärkerkraft auch über die Bremskraftübertragungskomponente 16 auf das erste Primärkolbenbauteil 14 zur kraftmäßigen Unterstützung des Fahrers bei einem Einbremsen in den Hauptbremszylinder 10 übertragen werden. Dies gewährleistet einen vorteilhaften Bremsbetätigungskomfort für den Fahrer.

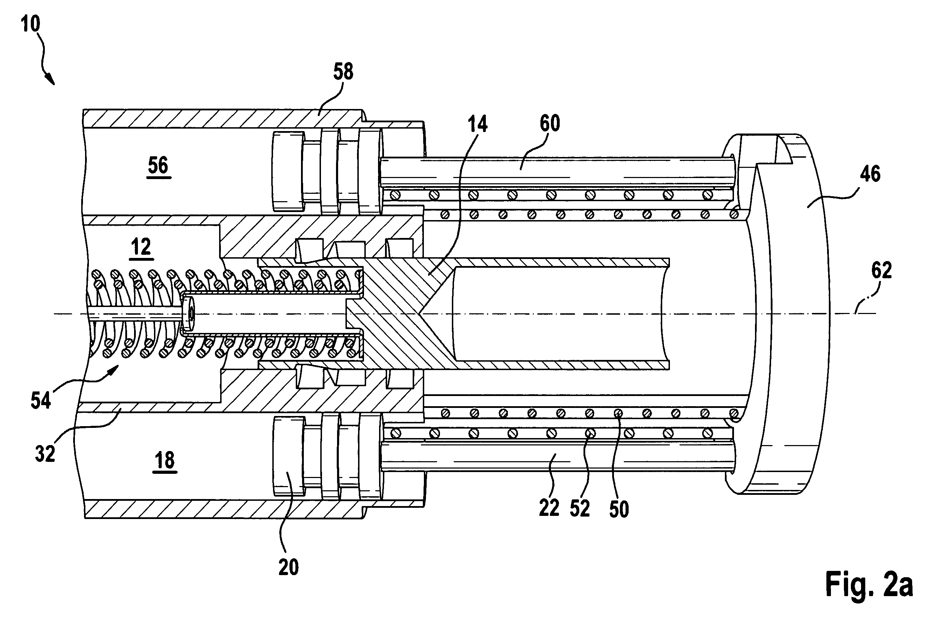

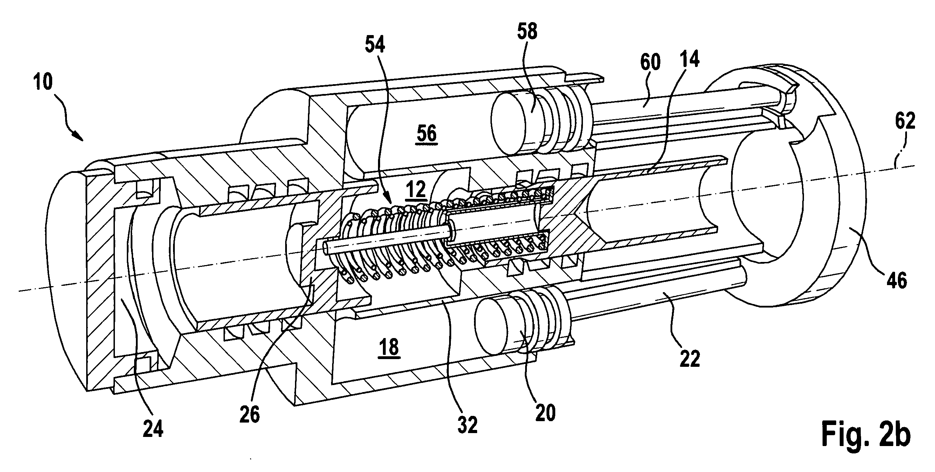

Fig. 2a und 2b zeigen schematische Teildarstellungen einer zweiten Ausführungsform des Bremsgeräts.

Die in Fig. 2a und 2b schematisch wiedergegebene Ausführungsform weist die oben schon beschriebenen Komponenten auf. Auf eine genauere Einzeichnung des ersten Leerwegs und des zweiten Leerwegs ist bei den Fig. 2a und 2b verzichtet. In Fig. 2a und 2b sind auch eine mit der Bremskraftübertragungskomponente 16 zusammenwirkende erste Rückstellfeder 50, eine mit dem Verstärkerkörper 46 zusammenwirkende zweite Rückstellfeder 52 und ein in der ersten Primärkolbenkammer 12 angeordnetes Federsystem 54, über welches sich das erste Primärkolbenbauteil 14 an dem Sekundärkolbenbauteil 26 abstützt, dargestellt.

Außerdem weist der Hauptbremszylinder 10 bei der dargestellten Ausführungsform noch eine dritte Primärkolbenkammer 56 auf, deren drittes Volumen mittels eines verstellbaren dritten Primärkolbenbauteils 58 variierbar ist. Über eine weitere Verstärkerkraftübertragungskomponente 60 kann zumindest ein Teil der Verstärkerkraft auch von dem Verstärkerkörper 46 auf das dritte Primärkolbenbauteil 58 übertragen werden. Somit ist der Vorteil der variierenden Einbremsfläche, welcher oben bereits ausgeführt wird, mittels einer Weiterbildung des Hauptbremszylinders 10 noch beliebig steigerbar. Die zweite Primärkolbenkammer 18 und die dritte Primärkolbenkammer 56 können insbesondere symmetrisch zueinander bezüglich einer Mittellängsachse 62 der ersten Primärkolbenkammer 12 ausgebildet sein. Die hier beschriebene Weiterbildung des Hauptbremszylinders 10 ist jedoch optional.

Die in den oberen Absätzen beschriebenen Bremsgeräte können in einer vorteilhaften Weiterbildung auch eine Aktor-Steuervorrichtung und/oder eine Generator-Steuervorrichtung aufweisen. Das Zusammenwirken der Bremsgeräte mit der Aktor-Steuervorrichtung ist vorteilhaft, sofern zumindest die in ihrer kraftfreien Ausgangsstellung vorliegende Bremskraftübertragungskomponente 16 um den ersten Leerweg ungleich Null beabstandet von dem ersten Primärkolbenbauteil 14 vorliegt, welcher erst ab einer Mindest-Fahrerbremskraft schließbar ist. Insbesondere ist die Aktor-Steuervorrichtung vorteilhaft, wenn die in ihrer kraftfreien Ausgangsstellung vorliegende Bremskraftübertragungskomponente 16 um den ersten Leerweg ungleich Null beabstandet von dem ersten Primärkolbenbauteil 14 vorliegt, welcher größer als ein Abstand zwischen der in ihrer kraftfreien Ausgangsstellung vorliegenden Verstärkerkraftübertragungskomponente 22 und dem zweiten Primärkolbenbauteil 20 ist. Bevorzugter Weise ist die Aktor-Steuervorrichtung so ausgelegt, dass mittels der Aktor-Steuervorrichtung die Aktoreinrichtung so ansteuerbar ist, dass bei einer Fahrerbremskraft unter der Mindest-Fahrerbremskraft eine vorgegebene Soll-Verstärkerkraft mittels der angesteuerten Aktoreinrichtung so auf das zweiten Primärkolbenbauteil 20 ausübbar ist, dass das zweite Volumen der zweiten Primärkolbenkammer 18 mittels des verstellten zweiten Primärkolbenbauteils 20 reduzierbar und ein Flüssigkeitstransfer von der zweiten Primärkolbenkammer 18 in die mindestens einen Radbremszylinder zum Aufbauen eines Vordrucks zumindest in den mindestens einen Radbremszylinder auslösbar ist.

Vorteilhafter Weise ist die Aktor-Steuervorrichtung zusätzlich dazu ausgelegt, die Soll-Verstärkerkraft unter Berücksichtigung mindestens eines Zustands einer Bremssystemkomponente und/oder einer Verkehrssituation vorzugeben. Insbesondere kann die Soll-Verstärkerkraft mittels der Aktor-Steuervorrichtung so vorgebbar sein, dass ein Lüftspiel zwischen mindestens einem restmomentfreien Bremssattel und einer Bremsscheibe mittels des aufgebauten Vordrucks schließbar ist. Die oben beschriebenen Bremsgeräte können insbesondere eine Untereinheit eines Bremssystems sein, welches mindestens einen restmomentfreien Bremssattel aufweist. Da die oben ausgeführten Bremsgeräte auf einfache Weise so betreibbar sind, dass bereits vor einem direkten Einbremsen ein Lüftspiel zwischen dem mindestens einen restmomentfreien Bremssattel und einer Bremsscheibe geschlossen werden kann, gewährleistet ein derartiges Bremssystem die Vorteile eines vorteilhaften Bremskomforts für den Fahrer bei einem reduzierten Kraftstoffverbrauch und einer geringeren Schadstoffemission.

Das Zusammenwirken der oben beschriebenen Bremsgeräte mit einer Generator-Steuervorrichtung ist vorteilhaft, sofern zumindest die in ihrer kraftfreien Ausgangsstellung vorliegende Verstärkerkraftübertragungskomponente 22 um den zweiten Leerweg ungleich Null beabstandet von dem zweiten Primärkolbenbauteil 20 vorliegt, welcher erst ab einer Mindest-Verstärkerkraft schließbar ist. Insbesondere ist die Generator-Steuervorrichtung vorteilhaft, wenn die in ihrer kraftfreien Ausgangsstellung vorliegende Verstärkerkraftübertragungskomponente 22 um den zweiten Leerweg ungleich Null beabstandet von dem zweiten Primärkolbenbauteil 20 vorliegt, welcher größer als ein Abstand zwischen der in ihrer kraftfreien Ausgangsstellung vorliegenden Bremskraftübertragungskomponente 16 und dem ersten Primärkolbenbauteil 14 ist. Vorteilhafterweise ist die Generator-Steuervorrichtung zumindest bei einer Verstärkerkraft unter der Mindest-Verstärkerkraft dazu ausgelegt, einen Generator so anzusteuern, dass mittels des Generators ein Generator-Bremsmoment ungleich Null ausübbar ist.

Die Aktor-Steuervorrichtung und/oder die Generator-Steuervorrichtung können insbesondere dazu ausgelegt sein, die anhand der nachfolgend beschriebenen Verfahren erläuterten Funktionen auszuführen. Bezüglich der Funktionsweise der Aktor-Steuervorrichtung und der Generator-Steuervorrichtung, welche insbesondere in eine gemeinsame Elektronik integriert sein können, und der sich daraus ergebenden Vorteile wird deshalb auf die nachfolgenden Verfahren verwiesen.

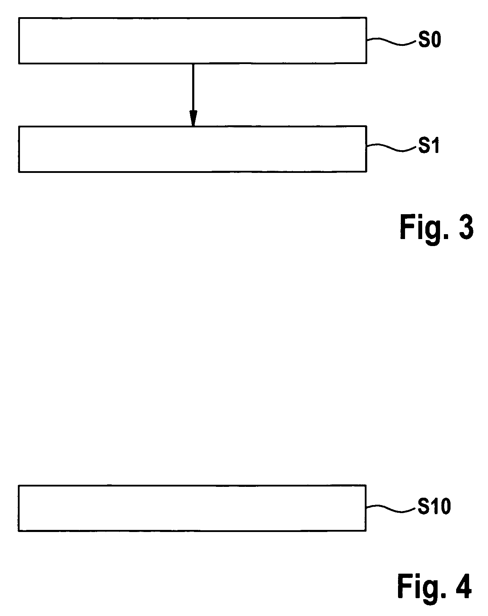

Fig. 3 zeigt ein Flussdiagramm zum Darstellen einer ersten Ausführungsform des Verfahrens zum Betreiben eines Bremsgeräts eines Fahrzeugs.

Das anhand der Fig. 3 wiedergegebene Verfahren ist ausführbar mittels eines Bremsgeräts mit einem Hauptbremszylinder mit einer ersten Primärkolbenkammer und einer zweiten Primärkolbenkammer, einer Bremskraftübertragungskomponente, mittels welcher zumindest eine Fahrerbremskraft auf ein von der Bremskraftübertragungskomponente kontaktiertes erstes verstellbares Primärkolbenbauteil so übertragen wird, dass ein erstes Volumen der ersten Primärkolbenkammer mittels des verstellten ersten Primärkolbenbauteils variiert wird, und einer Verstärkerkraftübertragungskomponente, mit welcher eine von einer Aktoreinrichtung bereitgestellte Verstärkerkraft zumindest teilweise so auf ein von der Verstärkerkraftübertragungskomponente kontaktiertes zweites verstellbares Primärkolbenbauteil übertragen wird, dass ein zweites Volumen der zweiten Primärkolbenkammer mittels des verstellten zweiten Primärkolbens variiert wird. Außerdem liegt zumindest die Bremskraftübertragungskomponente in ihrer kraftfreien Ausgangsstellung um einen ersten Leerweg ungleich Null von dem ersten Primärkolbenbauteil beabstandet vor, welcher erst ab einer Mindest-Fahrerbremskraft geschlossen wird. Das Verfahren ist auch vorteilhaft, sofern die in ihrer kraftfreien Ausgangsstellung vorliegende Bremskraftübertragungskomponente um den ersten Leerweg ungleich Null beabstandet von dem ersten Primärkolbenbauteil vorliegt, welcher größer als ein Abstand zwischen der in ihrer kraftfreien Ausgangsstellung vorliegenden Verstärkerkraftübertragungskomponente und dem zweiten Primärkolbenbauteil ist. Das hier beschriebene Verfahren ist beispielsweise mittels der oben beschriebenen Bremsgeräte ausführbar. Die Ausführbarkeit des Verfahrens ist jedoch nicht auf eine Verwendung eines derartigen Bremsgeräts limitiert.

Das Verfahren weist zumindest einen Verfahrensschritt S1 auf, in welchem ein Vordruck zumindest mindestens einen Radbremszylinder bei/trotz einer Fahrerbremskraft unter der Mindest-Fahrerbremskraft aufgebaut wird. Dies erfolgt durch Ausüben einer vorgegebenen Soll-Verstärkerkraft mittels der Aktoreinrichtung. Die zumindest teilweise auf das zweite Primärkolbenbauteil übertragene Soll-Verstärkerkraft bewirkt eine Reduzierung des zweiten Volumens der zweiten Primärkolbenkammer mittels des verstellten zweiten Primärkolbenbauteils und löst einen Flüssigkeitstransfer von der zweiten Primärkolbenkammer in den mindestens einen Radbremszylinder aus. Somit liegt bereits bei einem Beginn eines direkten Einbremsens des Fahrers in den Hauptbremszylinder ein vorteilhafter Vordruck in dem mindestens einen Radbremszylinder vor.

Optionalerweise weist das Verfahren auch einen Verfahrensschritt S0 auf, in welchem die Soll-Verstärkerkraft unter Berücksichtigung mindestens eines Zustands einer Bremssystemkomponente und/oder einer Verkehrssituation vorgeben wird. Beispielsweise kann nach einem Erkennen einer Verkehrssituation, in welcher ein schnelles Abbremsen des Fahrzeugs vorteilhaft erscheint, bereits vor einem direkten Einbremsen des Fahrers in den Hauptbremszylinder ein vorteilhafter Vordruck aufgebaut werden. Alternativ oder ergänzend kann auch mindestens ein Zustand einer Bremssystemkomponente, wie beispielsweise eine Funktionsbeeinträchtigung einer Bremssystemkomponente, beim Festlegen der Soll-Verstärkerkraft berücksichtigt werden.

In einer vorteilhaften Ausführungsform des Verfahrens wird die Soll-Verstärkerkraft so (fest/konstant) vorgegeben oder festgelegt, dass ein Lüftspiel zwischen mindestens einem Bremssattel, vorzugsweise einem restmomentfreien Bremssattel, und einer Bremsscheibe mittels des aufgebauten Vordrucks bereits vor einem direkten Einbremsen des Fahrers in den Hauptbremszylinder geschlossen wird. Ein restmomentfreier Bremssattel verfügt über ein erhöhtes Lüftspiel. Man kann dies auch so umschreiben, dass bei einem restmomentfreien Bremssattel kein Schleifen der Beläge des Bremssattels an der Bremsscheibe auftritt. Demgegenüber tritt bei einem andersartigen Bremssattel/nicht-restmomentfreien Bremssattel selbst bei einer Fahrt unter Nichtbetätigung des Bremsbetätigungselements ein Schleifen der Beläge an der Bremsscheibe auf, welches ein in der Regel unerwünschtes Abbremsen des Fahrzeugs bewirken kann. Dieses unerwünschte Abbremsen aufgrund des Schleifens der Beläge eines nichtrestmomentfreien Bremssattels muss deshalb in der Regel durch eine zusätzliche Beschleunigung des Fahrzeugs kompensiert werden, wodurch herkömmlicherweise ein Kraftstoffverbrauch und eine Schadstoffemission während der Fahrt unter Nichtbetätigung des Bremsbetätigungselements erhöht werden.

Demgegenüber ist das erhöhte Lüftspiel des restmomentfreien Bremssattels mit dem Vorteil verbunden, dass keine unerwünschte Abbremsung während einer Nichtbetätigung des Bremsbetätigungselements erfolgt und somit eine Fahrt des Fahrzeugs bereits bei einem geringeren Kraftstoffverbrauch und einer niedrigeren Schadstoffemission möglich ist. Durch das Lüftspiel wird jedoch eine Volumenaufnahme des zugeordneten Radbremszylinders, welche notwendig ist, bevor ein Bremsmoment bewirkt wird, erhöht. Herkömmlicherweise hat deshalb ein Fahrer eines Fahrzeugs mit restmomentfreien Bremssätteln oft den Eindruck, ein "langes Bremspedal" zu haben, was manchmal als unsportlich oder unangenehm empfunden wird. Deshalb lehnen viele Fahrer die Ausstattung ihres Fahrzeugs mit restmomentfreien Bremssätteln trotz der damit verbundenen Vorteile hinsichtlich des geringeren Kraftstoffverbrauchs und der niedrigeren Schadstoffemission ab.

Das durch den Verfahrensschritt S1 bewirkte Aufbauen des Vordrucks bewirkt jedoch ein Vorbefüllen des Radbremszylinders, wodurch bereits vor einem direkten Einbremsen des Fahrers in den Hauptbremszylinder das Lüftspiel überwunden werden kann. Der Fahrer eines Fahrzeugs, dessen Bremssystem mit dem hier wiedergegebenen Verfahren betrieben wird, hat somit auch bei einer Ausstattung mit restmomentfreien Bremssätteln ein normales Bremsgefühl/Pedalgefühl. Das hier beschriebene Verfahren kombiniert somit die Vorteile eines vorteilhaften Bremsgefühls/Pedalgefühls mit einem reduzierten Kraftstoffverbrauch und einer geringeren Schadstoffemission.

Insbesondere erhöhte Lüftspiele können mittels des hier beschriebenen Verfahrens kompensiert werden. Durch das dadurch bewirkte Vorbefüllen hat der Fahrer in jedem Fall einen kürzeren Bremsbetätigungsweg/Pedalweg. Außerdem ist das Anwenden des hier beschriebenen Verfahrens mit der oben schon beschriebenen verbesserten mechanischen Rückfallebene, beispielsweise bei einer Funktionsbeeinträchtigung mindestens einer Bremssystemkomponente, wie insbesondere der als Bremskraftverstärker genutzten Aktoreinrichtung, kombinierbar.

Fig. 4 zeigt ein Flussdiagramm zum Darstellen einer zweiten Ausführungsform des Verfahrens zum Betreiben eines Bremsgeräts eines Fahrzeugs.

Das Verfahren ist ausführbar mittels eines Bremsgeräts mit einem Hauptbremszylinder mit einer ersten Primärkolbenkammer und einer zweiten Primärkolbenkammer, einer Bremskraftübertragungskomponente, mittels welcher zumindest eine Fahrerbremskraft auf ein von der Bremskraftübertragungskomponente kontaktiertes erstes verstellbares Primärkolbenbauteil so übertragen wird, dass ein erstes Volumen der ersten Primärkolbenkammer mittels des verstellten ersten Primärkolbenbauteils variiert wird, und einer Verstärkerkraftübertragungskomponente, mittels welcher eine von einer Aktoreinrichtung bereitgestellte Verstärkerkraft zumindest teilweise so auf ein von der Verstärkerkraftübertragungskomponente kontaktiertes zweites verstellbares Primärkolbenbauteil übertragen wird, dass ein zweites Volumen der zweiten Primärkolbenkammer mittels des verstellten zweiten Primärkolbenbauteils variiert wird. Zumindest die in ihrer kraftfreien Ausgangsstellung vorliegende Verstärkerkraftübertragungskomponente ist um einen zweiten Leerweg ungleich Null von dem zweiten Primärkolbenbauteil beabstandet, welcher erst ab einer Mindest-Verstärkerkraft geschlossen wird. Außerdem ist das Verfahren vorteilhaft, wenn die in ihrer kraftfreien Ausgangsstellung vorliegende Verstärkerkraftübertragungskomponente um den zweiten Leerweg ungleich Null beabstandet von dem zweiten Primärkolbenbauteil vorliegt, welcher größer als ein Abstand zwischen der in ihrer kraftfreien Ausgangsstellung vorliegenden Bremskraftübertragungskomponente und dem ersten Primärkolbenbauteil ist.

Das hier beschriebene Verfahren ist beispielsweise mittels der oben beschriebenen Bremsgeräte ausführbar. Die Ausführbarkeit des Verfahrens ist jedoch nicht auf eine Verwendung eines derartigen Bremsgeräts limitiert.

Das Verfahren weist einen Verfahrensschritt S10 auf, in welchem zumindest bei einer Verstärkerkraft unter der Mindest-Verstärkerkraft ein Generator zum Ausüben eines Generator-Bremsmoments ungleich Null aktiviert wird. Somit kann der zweite Leerweg zwischen der Verstärkerkraftübertragungskomponente und dem zweiten Primärkolbenbauteil dazu genutzt werden, eine Bremswirkung der Aktoreinrichtung zu reduzieren, insbesondere zu unterbinden, und somit einen Generator zum schnelleren Aufladen einer Fahrzeugbatterie zu nutzen. Gleichzeitig ist in der oben schon beschriebenen Rückfallebene der Vorteil gewährleistet, dass der Fahrer schnell und zuverlässig direkt in den Hauptbremszylinder hineinbremsen kann, und somit einen Stillstand des Fahrzeugs bewirken kann.

Die in den oberen Absätzen beschriebene vorteilhafte Technologie ermöglicht eine Kopplung eines Betriebs der Aktoreinrichtung und einer Betätigung des Bremsbetätigungselements durch den Fahrer. Gleichzeitig ist es möglich, dem Fahrer im eingeschränkten Rahmen von dem Bremssystem zu entkoppeln. Ebenso ist ein Verblenden zwischen einem elektrischen Bremsen eines Generators und einem hydraulischen Bremsen eines mit der vorteilhaften Technologie ausgestatteten/betriebenen Bremssystems vorteilhaft ausführbar. Das Verblenden kann insbesondere so ausgeführt werden, dass der Fahrer keinen Unterschied zwischen einem elektrischen Bremsen und einem hydraulischen Bremsen bemerkt. Gleichzeitig kann durch das freie Einstellen eines primären Einbremsvolumens zumindest zwischen einem Gesamtvolumen der beiden Primärkolbenkammern oder lediglich der ersten Primärkolbenkammer, bzw. der Einbremsfläche, eine Verbesserung der Rückfallebene erreicht werden.

## Patentansprüche

1. Bremsgerät für ein Fahrzeug mit:
einem Hauptbremszylinder (10) mit einer ersten Primärkolbenkammer (12), deren erstes Volumen mittels eines verstellbaren ersten Primärkolbenbauteils (14) variierbar ist;
einer Bremskraftübertragungskomponente (16), an welcher ein Bremsbetätigungselement direkt oder indirekt derart anordbar ist, dass zumindest eine Fahrerbremskraft über die Bremskraftübertragungskomponente (16) auf das von der Bremskraftübertragungskomponente (16) kontaktierte verstellbare erste Primärkolbenbauteil (14) übertragbar ist; und
einem verstellbaren zweiten Primärkolbenbauteil (20);
**dadurch gekennzeichnet, dass**
der Hauptbremszylinder (10) eine zweite Primärkolbenkammer (18) aufweist, deren zweites Volumen mittels des verstellbaren zweiten Primärkolbenbauteils (20) variierbar ist; wobei
das Bremsgerät eine Verstärkerkraftübertragungskomponente (22) aufweist, an welcher eine Aktoreinrichtung direkt oder indirekt derart anordbar ist, dass eine von der Aktoreinrichtung bereitgestellte Verstärkerkraft zumindest teilweise über die Verstärkerkraftübertragungskomponente (22) auf das von der Verstärkerkraftübertragungskomponente (22) kontaktierte verstellbare zweite Primärkolbenbauteil (20) übertragbar ist; und wobei
die in ihrer kraftfreien Ausgangsstellung vorliegende Bremskraftübertragungskomponente (16) um einen ersten Leerweg (L1) ungleich Null von dem ersten Primärkolbenbauteil (14) beabstandet und/oder die in ihrer kraftfreien Ausgangsstellung vorliegende Verstärkerkraftübertragungskomponente (22) um einen zweiten Leerweg (L2) ungleich Null von dem zweiten Primärkolbenbauteil (20) beabstandet sind.

2. Bremsgerät nach Anspruch 1, wobei die in ihrer kraftfreien Ausgangsstellung vorliegende Bremskraftübertragungskomponente (16) um den ersten Leerweg (L1) ungleich Null von dem ersten Primärkolbenbauteil (14) beabstandet ist, welcher größer als ein Abstand zwischen der in ihrer kraftfreien Ausgangsstellung vorliegenden Verstärkerkraftübertragungskomponente (22) und dem zweiten Primärkolbenbauteil (20) ist.

3. Bremsgerät nach Anspruch 1 oder 2, wobei die in ihrer kraftfreien Ausgangsstellung vorliegende Verstärkerkraftübertragungskomponente (22) um den zweiten Leerweg (L2) ungleich Null von dem zweiten Primärkolbenbauteil (20) beabstandet ist, welcher größer als ein Abstand zwischen der in ihrer kraftfreien Ausgangsstellung vorliegenden Bremskraftübertragungskomponente (16) und dem ersten Primärkolbenbauteil (14) ist.

4. Bremsgerät nach einem der vorhergehenden Ansprüche, wobei das Bremsgerät eine Flüssigkeitsaustauscheinrichtung (38) aufweist, über welche bei einem Vorliegen der Flüssigkeitsaustauscheinrichtung (38) in einem ersten Betriebsmodus eine Flüssigkeit zwischen der ersten Primärkolbenkammer (12) und der zweiten Primärkolbenkammer (18) austauschbar ist, und über welche bei einem Vorliegen der Flüssigkeitsaustauscheinrichtung (38) in einem zweiten Betriebsmodus ein Flüssigkeitsaustausch zwischen der ersten Primärkolbenkammer (12) und der zweiten Primärkolbenkammer (18) unterbunden ist.

5. Bremsgerät nach einem der vorhergehenden Ansprüche, wobei der Hauptbremszylinder (10) zusätzlich eine Sekundärkolbenkammer (24) und einen zwischen der ersten Primärkolbenkammer (12) und der Sekundärkolbenkammer (24) verstellbaren Sekundärkolben (26) aufweist.

6. Bremsgerät nach einem der vorhergehenden Ansprüche, wobei zumindest die in ihrer kraftfreien Ausgangsstellung vorliegende Bremskraftübertragungskomponente (16) um den ersten Leerweg (L1) ungleich Null von dem ersten Primärkolbenbauteil (14) beabstandet ist, welcher erst ab einer Mindest-Fahrerbremskraft schließbar ist, und wobei das Bremsgerät eine Aktor-Steuervorrichtung aufweist, mittels welcher die Aktoreinrichtung so ansteuerbar ist, dass bei einer Fahrerbremskraft unter der Mindest-Fahrerbremskraft eine vorgegebene Soll-Verstärkerkraft mittels der angesteuerten Aktoreinrichtung so auf das zweite Primärkolbenbauteil (20) ausübbar ist, dass das zweite Volumen der zweiten Primärkolbenkammer (18) mittels des verstellten zweiten Primärkolbenbauteils (20) reduzierbar und ein Flüssigkeitstransfer von der zweiten Primärkolbenkammer (18) in mindestens einen Radbremszylinder (40, 44) zum Aufbauen eines Vordrucks in dem mindestens einen Radbremszylinder (40, 44) auslösbar ist.

7. Bremsgerät nach Anspruch 6, wobei die Aktor-Steuervorrichtung zusätzlich dazu ausgelegt ist, die Soll-Verstärkerkraft unter Berücksichtigung mindestens eines Zustands einer Bremssystemkomponente und/oder einer Verkehrssituation vorzugeben.

8. Bremsgerät nach Anspruch 6 oder 7, wobei die Soll-Verstärkerkraft so vorgegeben ist oder mittels der Aktor-Steuervorrichtung so vorgebbar ist, dass ein Lüftspiel zwischen mindestens einem restmomentfreien Bremssattel und einer Bremsscheibe mittels des aufgebauten Vordrucks schließbar ist.

9. Bremsgerät nach einem der vorhergehenden Ansprüche, wobei zumindest die in ihrer kraftfreien Ausgangsstellung vorliegende Verstärkerkraftübertragungskomponente (22) um den zweiten Leerweg (L2) ungleich Null von dem zweiten Primärkolbenbauteil (20) beabstandet ist, welcher erst ab einer Mindest-Verstärkerkraft schließbar ist, und wobei das Bremsgerät eine Generator-Steuervorrichtung aufweist, welche zumindest bei einer Verstärkerkraft unter der Mindest-Verstärkerkraft dazu ausgelegt ist, einen Generator so anzusteuern, dass mittels des Generators ein Generator-Bremsmoment ungleich Null ausübbar ist.

10. Bremssystem mit einem Bremsgerät nach einem der vorhergehenden Ansprüche.

11. Bremssystem nach Anspruch 10, wobei das Bremssystem mindestens einen restmomentfreien Bremssattel aufweist.

12. Verfahren zum Betreiben eines Bremsgeräts eines Fahrzeugs mit einem Hauptbremszylinder (10) mit einer ersten Primärkolbenkammer (12) und einer zweiten Primärkolbenkammer (18), einer Bremskraftübertragungskomponente (16), mittels welcher zumindest eine Fahrerbremskraft auf ein von der Bremskraftübertragungskomponente (16) kontaktiertes verstellbares erstes Primärkolbenbauteil (14) so übertragen wird, dass ein erstes Volumen der ersten Primärkolbenkammer (12) mittels des verstellten ersten Primärkolbenbauteils (14) variiert wird, und einer Verstärkerkraftübertragungskomponente (22), mittels welcher eine von einer Aktoreinrichtung bereitgestellte Verstärkerkraft zumindest teilweise so auf ein von der Verstärkerkraftübertragungskomponente (22) kontaktiertes verstellbares zweites Primärkolbenbauteil (20) übertragen wird, dass ein zweites Volumen der zweiten Primärkolbenkammer (18) mittels des verstellten zweiten Primärkolbenbauteils (20) variiert wird, wobei zumindest die in ihrer kraftfreien Ausgangsstellung vorliegende Bremskraftübertragungskomponente (16) um einen ersten Leerweg (L1) ungleich Null von dem ersten Primärkolbenbauteil (14) beabstandet ist, welcher erst ab einer Mindest-Fahrerbremskraft geschlossen wird, mit den Schritt:
Aufbauen eines Vordrucks in mindestens einem Radbremszylinder (40, 44) bei einer Fahrerbremskraft unter der Mindest-Fahrerbremskraft durch Ausüben einer vorgegebenen Soll-Verstärkerkraft mittels der Aktoreinrichtung zum Auslösen einer Reduzierung des zweiten Volumens der zweiten Primärkolbenkammer (18) mittels des verstellten zweiten Primärkolbenbauteils (20) und eines Flüssigkeitstransfers von der zweiten Primärkolbenkammer (18) in den mindestens einen Radbremszylinder (40, 44) (S1).

13. Verfahren nach Anspruch 12, wobei die Soll-Verstärkerkraft unter Berücksichtigung mindestens eines Zustands einer Bremssystemkomponente und/oder einer Verkehrssituation vorgegeben wird (S0).

14. Verfahren nach Anspruch 12 oder 13, wobei die Soll-Verstärkerkraft so vorgegeben ist oder wird, dass ein Lüftspiel zwischen mindestens einem restmomentfreien Bremssattel und einer Bremsscheibe mittels des aufgebauten Vordrucks geschlossen wird.

15. Verfahren zum Betreiben eines Bremsgeräts eines Fahrzeugs mit einem Hauptbremszylinder (10) mit einer ersten Primärkolbenkammer (12) und einer zweiten Primärkolbenkammer (18), einer Bremskraftübertragungskomponente (16), mittels welcher zumindest eine Fahrerbremskraft auf ein von der Bremskraftübertragungskomponente (16) kontaktiertes verstellbares erstes Primärkolbenbauteil (14) so übertragen wird, dass ein erstes Volumen der ersten Primärkolbenkammer (12) mittels des verstellten ersten Primärkolbenbauteils (14) variiert wird, und einer Verstärkerkraftübertragungskomponente (22), mittels welcher eine von einer Aktoreinrichtung bereitgestellte Verstärkerkraft zumindest teilweise so auf ein von der Verstärkerkraftübertragungskomponente (22) kontaktiertes verstellbares zweites Primärkolbenbauteil (20) übertragen wird, dass ein zweites Volumen der zweiten Primärkolbenkammer (18) mittels des verstellten zweiten Primärkolbenbauteils (20) variiert wird, wobei zumindest die in ihrer kraftfreien Ausgangsstellung vorliegende Verstärkerkraftübertragungskomponente (22) um einen zweiten Leerweg (L2) ungleich Null von dem zweiten Primärkolbenbauteil (20) beabstandet ist, welcher erst ab einer Mindest-Verstärkerkraft geschlossen wird, mit den Schritt:
Aktivieren eines Generators zum Ausüben eines Generator-Bremsmoments ungleich Null zumindest bei einer Verstärkerkraft unter der Mindest-Verstärkerkraft (S10).

## Claims

1. Brake device for a vehicle having:
a brake master cylinder (10) with a first primary piston chamber (12), the first volume of which can be varied by means of an adjustable first primary piston component (14);
a brake force transmission component (16), on which a brake actuating element can be arranged directly or indirectly in such a way that at least a driver brake force can be transmitted via the brake force transmission component (16) to the adjustable first primary piston component (14) which is contacted by the brake force transmission component (16); and
an adjustable second primary piston component (20) ;
**characterized in that**
the brake master cylinder (10) has a second primary piston chamber (18), the second volume of which can be varied by means of the adjustable second primary piston component (20);
the brake device having a booster force transmission component (22), on which an actuator device can be arranged directly or indirectly in such a way that a booster force which is provided by the actuator device can be transmitted at least partially via the booster force transmission component (22) to the adjustable second primary piston component (20) which is contacted by the booster force transmission component (22); and
the brake force transmission component (16) which is present in its force-free starting position being spaced apart from the first primary piston component (14) by a first idle travel (L1) which does not equal zero and/or the booster force transmission component (22) which is present in its force-free starting position being spaced apart from the second primary piston component (20) by a second idle travel (L2) which does not equal zero.

2. Brake device according to Claim 1, the brake force transmission component (16) which is present in its force-free starting position being spaced apart from the first primary piston component (14) by the first idle travel (L1) which does not equal zero and is greater than a spacing between the booster force transmission component (22) which is present in its force-free starting position and the second primary piston component (20).

3. Brake device according to Claim 1 or 2, the booster force transmission component (22) which is present in its force-free starting position being spaced apart from the second primary piston component (20) by the second idle travel (L2) which does not equal zero and is greater than a spacing between the brake force transmission component (16) which is present in its force-free starting position and the first primary piston component (14).

4. Brake device according to one of the preceding claims, the brake device having a liquid exchange device (38), via which, in the case of a presence of the liquid exchange device (38) in a first operating mode, a liquid can be exchanged between the first primary piston chamber (12) and the second primary piston chamber (18), and via which, in the case of a presence of the liquid exchange device (38) in a second operating mode, a liquid exchange between the first primary piston chamber (12) and the second primary piston chamber (18) is suppressed.

5. Brake device according to one of the preceding claims, the brake master cylinder (10) additionally having a secondary piston chamber (24) and a secondary piston (26) which can be adjusted between the first primary piston chamber (12) and the secondary piston chamber (24).

6. Brake device according to one of the preceding claims, at least the brake force transmission component (16) which is present in its force-free starting position being spaced apart from the first primary piston component (14) by the first idle travel (L1) which does not equal zero, which primary piston component (14) can be closed only above a minimum driver brake force, and the brake device having an actuator control apparatus, by means of which the actuator device can be actuated in such a way that, in the case of a driver brake force below the minimum driver brake force, a predefined setpoint booster force can be exerted by means of the actuated actuator device on the second primary piston component (20) in such a way that the second volume of the second primary piston chamber (18) can be reduced by means of the adjusted second primary piston component (20), and a liquid transfer can be triggered from the second primary piston chamber (18) into at least one wheel brake cylinder (40, 44) in order to build up a pilot pressure in the at least one wheel brake cylinder (40, 44).

7. Brake device according to Claim 6, the actuator control apparatus additionally being designed to predefine the setpoint booster force under consideration of at least one state of a brake system component and/or a traffic situation.

8. Brake device according to Claim 6 or 7, the setpoint booster force being predefined in such a way or being capable of being predefined by means of the actuator control apparatus in such a way that an air play between at least one brake calliper which is free from residual torque and a brake disc can be closed by means of the pilot pressure which is built up.

9. Brake device according to one of the preceding claims, at least the booster force transmission component (22) which is present in its force-free starting position being spaced apart from the second primary piston component (20) by the second idle travel (L2) which does not equal zero, which second primary piston component (20) can be closed only above a minimum booster force, and the brake device having a generator control apparatus which, at least in the case of a booster force below the minimum booster force, is designed to actuate a generator in such a way that a generator brake torque which does not equal zero can be exerted by means of the generator.

10. Brake system having a brake device according to one of the preceding claims.

11. Brake system according to Claim 10, the brake system having at least one brake calliper which is free from residual torque.

12. Method for operating a brake device of a vehicle having a brake master cylinder (10) with a first primary piston chamber (12) and a second primary piston chamber (18), a brake force transmission component (16), by means of which at least one driver brake force is transmitted to an adjustable first primary piston component (14) which is contacted by the brake force transmission component (16) in such a way that a first volume of the first primary piston chamber (12) is varied by means of the adjusted first primary piston component (14), and a booster force transmission component (22), by means of which a booster force which is provided by an actuator device is transmitted at least partially to an adjustable second primary piston component (20) which is contacted by the booster force transmission component (22) in such a way that a second volume of the second primary piston chamber (18) is varied by means of the adjusted second primary piston component (20), at least the brake force transmission component (16) which is present in its force-free starting position being spaced apart from the first primary piston component (14) by a first idle travel (L1) which does not equal zero, which first primary piston component (14) is closed only above a minimum driver brake force, having the step:
building up of a pilot pressure in at least one wheel brake cylinder (40, 44) in the case of a driver brake force below the minimum driver brake force by way of the exertion of a predefined setpoint booster force by means of the actuator device in order to trigger a reduction in the second volume of the second primary piston chamber (18) by means of the adjusted second primary piston component (20) and a liquid transfer from the second primary piston chamber (18) into the at least one wheel brake cylinder (40, 44) (S1).

13. Method according to Claim 12, the setpoint booster force being predefined under consideration of at least one state of a brake system component and/or a traffic situation (S0).

14. Method according to Claim 12 or 13, the setpoint booster force being predefined in such a way that an air play between at least one brake calliper which is free from residual torque and a brake disc is closed by means of the pilot pressure which is built up.

15. Method for operating a brake device of a vehicle having a brake master cylinder (10) with a first primary piston chamber (12) and a second primary piston chamber (18), a brake force transmission component (16), by means of which at least one driver brake force is transmitted to an adjustable first primary piston component (14) which is contacted by the brake force transmission component (16) in such a way that a first volume of the first primary piston chamber (12) is varied by means of the adjusted first primary piston component (14), and a booster force transmission component (22), by means of which a booster force which is provided by an actuator device is transmitted at least partially to an adjustable second primary piston component (20) which is contacted by the booster force transmission component (22) in such a way that a second volume of the second primary piston chamber (18) is varied by means of the adjusted second primary piston component (20), at least the booster force transmission component (22) which is present in its force-free starting position being spaced apart from the second primary piston component (20) by a second idle travel (L2) which does not equal zero, which second primary piston component (20) is closed only above a minimum booster force, having the step:
activating of a generator in order to exert a generator brake moment which does not equal zero at least in the case of a booster force below the minimum booster force (S10).

## Revendications

1. Appareil de freinage pour un véhicule, comprenant :
un cylindre de frein principal (10) comprenant une première chambre de piston primaire (12), dont le premier volume peut être modifié au moyen d'un premier composant de piston primaire réglable (14) ;
un composant de transfert de force de freinage (16), au niveau duquel peut être disposé directement ou indirectement un élément d'actionnement de frein, de telle sorte qu'au moins une force de freinage du conducteur puisse être transmise par le composant de transfert de force de freinage (16) au premier composant de piston primaire réglable (14) avec lequel vient en contact le composant de transfert de force de freinage (16) ; et
un deuxième composant de piston primaire réglable (20) ;
**caractérisé en ce que**
le cylindre de frein principal (10) présente une deuxième chambre de piston primaire (18), dont le deuxième volume peut être modifié au moyen du deuxième composant de piston primaire réglable (20) ;
l'appareil de freinage présentant un composant de transfert de force d'amplification (22) au niveau duquel peut être disposé directement ou indirectement un dispositif d'actionneur de telle sorte qu'une force d'amplification fournie par le dispositif d'actionneur puisse être transmise au moins en partie par le biais du composant de transfert de force d'amplification (22) au deuxième composant de piston primaire réglable (20) avec lequel vient en contact le composant de transfert de force d'amplification (22) ; et
le composant de transfert de force de freinage (16) se trouvant dans sa position initiale sans force étant espacé d'une première course à vide (L1) différente de zéro du premier composant de piston primaire (14) et/ou le composant de transfert de force d'amplification (22) se trouvant dans sa position initiale sans force étant espacé d'une deuxième course à vide (L2) différente de zéro du deuxième composant de piston primaire (20).

2. Appareil de freinage selon la revendication 1, dans lequel le composant de transfert de force de freinage (16) se trouvant dans sa position initiale sans force est espacé de la première course à vide (L1) différente de zéro du premier composant de piston primaire (14), laquelle est supérieure à une distance entre le composant de transfert de force d'amplification (22) se trouvant dans sa position initiale sans force et le deuxième composant de piston primaire (20).

3. Appareil de freinage selon la revendication 1 ou 2, dans lequel le composant de transfert de force d'amplification (22) se trouvant dans sa position initiale sans force est espacé de la deuxième course à vide (L2) différente de zéro du deuxième composant de piston primaire (20), laquelle est supérieure à une distance entre le composant de transfert de force de freinage (16) se trouvant dans sa position initiale sans force et le premier composant de piston primaire (14).

4. Appareil de freinage selon l'une quelconque des revendications précédentes, dans lequel l'appareil de freinage présente un dispositif d'échange de liquide (38) par le biais duquel, lorsque le dispositif d'échange de liquide (38) se trouve dans un premier mode de fonctionnement, un liquide peut être échangé entre la première chambre de piston primaire (12) et la deuxième chambre de piston primaire (18), et par le biais duquel, lorsque le dispositif d'échange de liquide (38) se trouve dans un deuxième mode de fonctionnement, un échange de liquide entre la première chambre de piston primaire (12) et la deuxième chambre de piston primaire (18) n'est pas possible.

5. Appareil de freinage selon l'une quelconque des revendications précédentes, dans lequel le cylindre de frein principal (10) présente en outre une chambre de piston secondaire (24) et un piston secondaire (26) pouvant être déplacé entre la première chambre de piston primaire (12) et la chambre de piston secondaire (24).

6. Appareil de freinage selon l'une quelconque des revendications précédentes, dans lequel au moins le composant de transfert de force de freinage (16) se trouvant dans sa position initiale sans force est espacé de la première course à vide (L1) différente de zéro du premier composant de piston primaire (14), lequel peut être fermé seulement à partir d'une force de freinage minimale du conducteur, et dans lequel l'appareil de freinage présente un dispositif de commande d'actionneur au moyen duquel le dispositif d'actionneur peut être commandé de telle sorte que dans le cas d'une force de freinage du conducteur inférieure à la force de freinage minimale du conducteur, une force d'amplification de consigne prédéfinie puisse être exercée au moyen du dispositif d'actionneur commandé sur le deuxième composant de piston primaire (20) de telle sorte que le deuxième volume de la deuxième chambre de piston primaire (18) puisse être réduit au moyen du deuxième composant de piston primaire déplacé (20) et qu'un transfert de liquide de la deuxième chambre de piston primaire (18) dans au moins un cylindre de frein de roue (40, 44) puisse être initié pour augmenter une pression pilote dans l'au moins un cylindre de frein de roue (40, 44).

7. Appareil de freinage selon la revendication 6, dans lequel le dispositif de commande d'actionneur est en outre conçu pour prédéfinir la force d'amplification de consigne en tenant compte d'au moins un état d'un composant du système de freinage et/ou d'une situation de circulation.

8. Appareil de freinage selon la revendication 6 ou 7, dans lequel la force d'amplification de consigne est prédéfinie, ou peut être prédéfinie au moyen du dispositif de commande d'actionneur de telle sorte qu'un jeu entre au moins un étrier de frein exempt de couple résiduel et un disque de frein puisse être fermé au moyen de la pression pilote augmentée.

9. Appareil de freinage selon l'une quelconque des revendications précédentes, dans lequel au moins le composant de transfert de force d'amplification (22) se trouvant dans sa position initiale sans force est espacé de la deuxième course à vide (L2) différente de zéro du deuxième composant de piston primaire (20), lequel peut être fermé seulement à partir d'une force d'amplification minimale, et dans lequel l'appareil de freinage présente un dispositif de commande de générateur qui est conçu, au moins pour une force d'amplification en dessous de la force d'amplification minimale, pour commander un générateur de telle sorte qu'un couple de freinage de générateur différent de zéro puisse être exercé au moyen du générateur.

10. Système de freinage comprenant un appareil de freinage selon l'une quelconque des revendications précédentes.

11. Système de freinage selon la revendication 10, dans lequel le système de freinage présente au moins un étrier de frein exempt de couple résiduel.

12. Procédé pour faire fonctionner un appareil de freinage d'un véhicule comprenant un cylindre de frein principal (10) comprenant une première chambre de piston primaire (12) et une deuxième chambre de piston primaire (18), un composant de transfert de force de freinage (16), au moyen duquel au moins une force de freinage du conducteur est transmise à un premier composant de piston primaire (14) réglable avec lequel vient en contact le composant de transfert de force de freinage (16) de telle sorte qu'un premier volume de la première chambre de piston primaire (12) soit modifié au moyen du premier composant de piston primaire réglé (14), et un composant de transfert de force d'amplification (22), au moyen duquel une force d'amplification fournie par un dispositif d'actionneur est transmise au moins en partie à un deuxième composant de piston primaire réglable (20) avec lequel vient en contact le composant de transfert de force d'amplification (22) de telle sorte qu'un deuxième volume de la deuxième chambre de piston primaire (18) soit modifié au moyen du deuxième composant de piston primaire réglé (20), au moins le composant de transfert de force de freinage (16) se trouvant dans sa position initiale sans force étant espacé d'une première course à vide (L1) différente de zéro du premier composant de piston primaire (14), lequel est fermé seulement à partir d'une force de freinage minimale du conducteur, comprenant l'étape suivante :
augmentation d'une pression pilote dans au moins un cylindre de frein de roue (40, 44) dans le cas d'une force de freinage du conducteur en dessous de la force de freinage minimale du conducteur en exerçant une force d'amplification de consigne prédéfinie au moyen du dispositif d'actionneur pour initier une réduction du deuxième volume de la deuxième chambre de piston primaire (18) au moyen du deuxième composant de piston primaire réglé (20) et d'un transfert de liquide de la deuxième chambre de piston primaire (18) dans l'au moins un cylindre de frein de roue (40, 44) (S1).

13. Procédé selon la revendication 12, dans lequel la force d'amplification de consigne est prédéfinie (S0) en tenant compte d'au moins un état d'un composant du système de freinage et/ou d'une situation de circulation.

14. Procédé selon la revendication 12 ou 13, dans lequel la force d'amplification de consigne est prédéfinie de telle sorte qu'un jeu entre au moins un étrier de frein exempt de couple résiduel et un disque de frein soit fermé au moyen de la pression pilote augmentée.

15. Procédé pour faire fonctionner un appareil de freinage d'un véhicule comprenant un cylindre de frein principal (10) comprenant une première chambre de piston primaire (12) et une deuxième chambre de piston primaire (18), un composant de transfert de force de freinage (16), au moyen duquel au moins une force de freinage du conducteur est transmise à un premier composant de piston primaire réglable (14) avec lequel vient en contact le composant de transfert de force de freinage (16) de telle sorte qu'un premier volume de la première chambre de piston primaire (12) soit modifié au moyen dû premier composant de piston primaire réglé (14), et un composant de transfert de force d'amplification (22), au moyen duquel une force d'amplification fournie par un dispositif d'actionneur est transmise au moins en partie à un deuxième composant de piston primaire réglable (20) avec lequel vient en contact le composant de transfert de force d'amplification (22) de telle sorte qu'un deuxième volume de la deuxième chambre de piston primaire (18) soit modifié au moyen du deuxième composant de piston primaire réglé (20), au moins le composant de transfert de force d'amplification (22) se trouvant dans sa position initiale sans force étant espacé d'une deuxième course à vide (L2) différente de zéro du deuxième composant de piston primaire (20), qui est seulement fermé à partir d'une force d'amplification minimale, comprenant l'étape suivante :
activation d'un générateur pour exercer un couple de freinage de générateur différent de zéro au moins dans le cas d'une force d'amplification inférieure à la force d'amplification minimale (S10).
